# EUROPEAN PATENT APPLICATION

(11) **EP 4 243 242 A1**
(43) Date of publication of application: **13.09.2023**
(21) Application number: 21889108.3
(22) Date of filing: 27.10.2021
(51) Int. Cl.: H02J 13/00, H02J 7/00, H02J 7/02, B60L 53/63, B60L 53/67

(54) **CHARGE CONTROL DEVICE, CHARGE SYSTEM, CHARGE CONTROL METHOD, AND PROGRAM**

(30) Priority: 06.11.2020 JP 2020186080
(71) Applicant: Panasonic Intellectual Property Management Co., Ltd., Osaka-shi, Osaka 540-6207 (JP)
(72) Inventor: YAMAMOTO, Yuto, Osaka-shi, Osaka 540-6207 (JP); OSHIMA, Akiyoshi, Osaka-shi, Osaka 540-6207 (JP); MURAKAMI, Takashi, Osaka-shi, Osaka 540-6207 (JP)
(74) Representative: Appelt, Christian W.
(86) International application number: PCT/JP2021/039680
(87) International publication number: WO 2022/097555

(57) **Abstract**

An object of the present disclosure is to provide a charge control device configured to appropriately charge storage batteries mounted on respective electrically driven vehicles. A charge control device (1) includes a first communicator (10), a determiner (11), and a controller (12). The first communicator (10) is configured to communicate with each of the plurality of charge facilities(2). The determiner (11) is configured to determine a charging current value to be allocated to each of the plurality of charge facilities(2). The controller (12) is configured to cause the first communicator (10) to transmit the charging current value determined by the determiner (11) to each of the plurality of charge facilities(2). The determiner (11) is configured to make an allocation of one or more first current values respectively to one or more charge facilities (2) which are included in the plurality of charge facilities (2) and each of which is not supplying a charging current. The determiner (11) is configured to make an allocation of one or more second current values respectively to one or more charge facilities (2) which are included in the plurality of charge facilities (2) and each of which is supplying the charging current and determine the allocation of the one or more first current values and the allocation of the one or more second current values such that a total of the one or more first current values and the one or more second current values does not exceed an upper limit value which is predetermined.

## Description

### Technical Field

The present disclosure relates to charge control devices, charge systems, charge control methods, and programs, and specifically, to a charge control device configured to charge a storage battery mounted on an electrically driven vehicle, a charge system, a charge control method, and a program.

### Background Art

As a known example, Patent Literature 1 describes a management system. The management system described in Patent Literature 1 is a system for providing a vehicle-sharing service. The management system described in Patent Literature 1 includes a station which includes a parking space for electric vehicles and at which a charge facility and the like for charging the electric vehicles are installed. A user of the service rents an electric vehicle parked at the station, uses the electric vehicle, and then returns the electric vehicle to the station. Then, the electric vehicle thus use is charged by the charge facility installed at the station.

Incidentally, in the management system described in Patent Literature 1, when a plurality of charge facilities installed at a single station simultaneously charge respective electric vehicles (electrically driven vehicles), it is not desirable that each charge facility charge its corresponding electric vehicle at a maximum suppliable charging current.

### Citation List

### Patent Literature

Patent Literature 1 : JP 2018-018250 A

### Summary of Invention

It is an object of the present disclosure to provide a charge control device configured to appropriately charge storage batteries mounted on respective electrically driven vehicles, a charge system, a charge control method, and a program.

A charge control device according to an aspect of the present disclosure is configured to control a plurality of charge facilities. The plurality of charge facilities are each electrically connectable to an electrically driven vehicle on which a storage battery is mounted. The plurality of charge facilities are each configured to supply a charging current to the storage battery of the electrically driven vehicle, which is electrically connected, within a range not exceeding a charging current value allocated by the charge control device. The charge control device includes: a communicator configured to communicate with each of the plurality of charge facilities; and a determiner configured to determine the charging current value to be allocated to each of the plurality of charge facilities. The charge control device includes a controller configured to cause the communicator to transmit the charging current value determined by the determiner to each of the plurality of charge facilities. The determiner is configured to make an allocation of one or more first current values respectively to one or more charge facilities which are included in the plurality of charge facilities and each of which is not supplying the charging current. The determiner is configured to: make an allocation of one or more second current values respectively to one or more charge facilities which are included in the plurality of charge facilities and each of which is supplying the charging current; and determine the allocation of the one or more first current values and the allocation of the one or more second current values such that a total of the one or more first current values and the one or more second current values does not exceed an upper limit value which is predetermined.

A charge system according to an aspect of the present disclosure includes: the charge control device; and the plurality of charge facilities configured to be controlled by the charge control device. The plurality of charge facilities are each configured to supply the charging current such that each of the one or more second current values indicated by the charge control device is not exceeded.

A charge control method according to an aspect of the present disclosure is a charge control method performed by the charge control device. The charge control method includes a step of making an allocation of one or more first current values respectively to one or more charge facilities which are included in the plurality of charge facilities and each of which is not supplying the charging current. The charge control method includes a step of making an allocation of one or more second current values respectively to one or more charge facilities which are included in the plurality of charge facilities and each of which is supplying the charging current. The charge control method determines the allocation of the one or more first current values and the allocation of the one or more second current values such that a total of the one or more first current values and the one or more second current values does not exceed an upper limit value which is predetermined.

A program according to an aspect of the present disclosure is configured to cause a computer to execute the following steps. The steps include: a step of making an allocation of one or more first current values respectively to one or more charge facilities which are included in a plurality of charge facilities and each of which is not supplying a charging current; a step of making an allocation of one or more second current values respectively to one or more charge facilities which are included in the plurality of charge facilities and each of which is supplying the charging current; and a step of determining the allocation of the one or more first current values and the allocation of the one or more second current values such that a total of the one or more first current values and the one or more second current values does not exceed an upper limit value which is predetermined.

### Brief Description of Drawings

FIG. 1 is a system configuration diagram of a charge system according to an embodiment of the present disclosure;
FIG. 2 is a block diagram of a charge control device and the charge system of the embodiment of the present disclosure;
FIG. 3 is a block diagram of a charge control device and a charge system of a first variation; and
FIG. 4 is a system configuration diagram of a charge system of a second variation.

### Description of Embodiments

An embodiment of the present disclosure will be described below. The embodiment described below is a mere example of various embodiments of the present disclosure. Moreover, the embodiment described below may be modified variously depending on design or the like as long as the object of the present disclosure is achieved.

### (1) Overview of Embodiment

### (1-1) Overview of Charge Control Device According to Embodiment

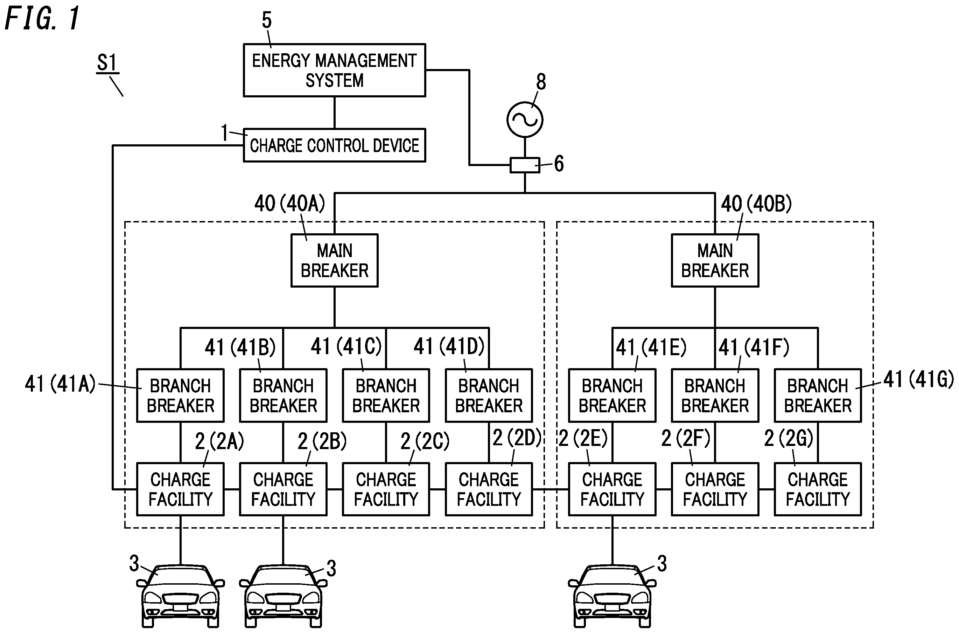

A charge control device 1 according to the embodiment controls a plurality of charge facilities 2. The plurality of charge facilities 2 are each electrically connectable to an electrically driven vehicle (electric vehicle 3) on which a storage battery 30 is mounted. Moreover, the plurality of charge facilities 2 are each configured to supply a charging current to the storage battery 30 of the electrically driven vehicle, which is electrically connected, within a range not exceeding a charging current value allocated by the charge control device 1 (see FIG. 1).

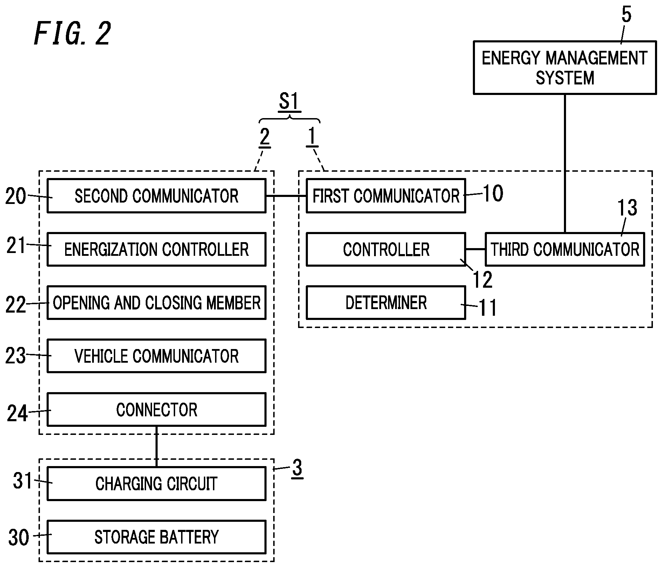

The charge control device 1 according to the embodiment includes: a communicator (first communicator 10) configured to communicate with each of the plurality of charge facilities 2; and a determiner 11 configured to determine the charging current value to be allocated to each of the plurality of charge facilities 2. The charge control device 1 according to the embodiment further includes a controller 12 configured to cause the communicator to transmit the charging current value determined by the determiner 11 to each of the plurality of charge facilities 2 (see FIG. 2).

The determiner 11 makes an allocation of one or more first current values respectively to one or more charge facilities 2 which are included in the plurality of charge facilities 2 and each of which is not supplying the charging current. The determiner 11 makes an allocation of one or more second current values respectively to one or more charge facilities 2 which are included in the plurality of charge facilities 2 and each of which is supplying the charging current. Further, the determiner 11 determines the allocation of the one or more first current values and the allocation of the one or more second current values such that the total of the one or more first current values and the one or more second current values does not exceed an upper limit value which is predetermined. Note that the upper limit value is, for example, a value not exceeding the rated current of a main breaker 40 to which the plurality of charge facilities 2 are electrically connected.

Here, suppose that two charge facilities 2 (2A and 2B) of four charge facilities 2 supply the charging current to the electric vehicles 3 and the remaining two charge facilities 2 (2C and 2D) do not supply the charging currents (see FIG. 1). In this case, when a difference between the total of the second current values to be allocated to the two charge facilities 2A and 2B and the upper limit value is substantially zero, newly connecting an electric vehicle 3 to the charge facility 2C may result in that a total charging current of the three charge facilities 2A, 2B, and 2C exceeds the upper limit value.

Therefore, in the charge control device 1 according to the embodiment, the first current value (e.g., 6 A) is allocated to each of the charge facilities 2C and 2D which are not supplying the charging currents, and the determiner 11 determines the allocation of the second current values such that the total of the first current values and the second current values does not exceed the upper limit value. Thus, in the charge control device 1 according to the embodiment, when the electric vehicle 3 is newly connected to the charge facility 2C and the charge facility 2C even starts supplying the charging current at the first current value, the total charging current of the three charge facilities 2A, 2B, and 2C does not exceed the upper limit value.

As a result, the charge control device 1 according to the embodiment enables the storage battery 30 mounted on each of the plurality of electrically driven vehicles (electric vehicles 3)to be appropriately charged.

### (1-2) Overview of Charge System According to Embodiment

A charge system S1 according to the embodiment includes: the charge control device 1 according to the embodiment; and the plurality of charge facilities 2 controlled by the charge control device 1 according to the embodiment (see FIG. 1). Each of the plurality of charge facilities 2 supplies the charging current such that the second current value indicated by the charge control device 1 is not exceeded.

The charge system S1 according to the embodiment includes the charge control device 1 according to the embodiment and thus enables the storage battery 30 mounted on each of the plurality of electrically driven vehicles (electric vehicles 3) to be appropriately charged.

### (2) Details of Embodiment

### (2-1) Details of Charge System According to Embodiment

The charge system S1 according to the embodiment (hereinafter abbreviated as a charge system S1) includes the charge control device 1 according to the embodiment (hereinafter abbreviated as a charge control device 1) and a plurality of (in the example shown in the drawings, seven) charge facilities 2 as shown in FIG. 1. Note that in the following description, the seven charge facilities 2 may be denoted by reference signs "2A", "2B", "2C", "2D", "2E", "2F", and "2G" to individually distinguish the seven charge facilities 2 from one another.

The charge system S1 is installed at a business site of, for example, a manufacturing company, a retail company, or a company producing various services. At the business site, electric vehicles 3 are prepared as a plurality of business vehicles to be used by sales personnel. A salesperson uses the electric vehicle 3 to conduct a business operation, and after the salesperson comes back to the business site, the salesperson connects the electric vehicle 3 thus used to the charge facility 2 such that the storage battery 30 mounted on the electric vehicle 3 is charged. Note that in the following description, charging the storage battery 30 mounted on the electric vehicle 3 may be expressed as charging the electric vehicle 3.

The charge facilities 2 are electrically connected to branch breakers 41 on a one-to-one basis. The plurality of (in the example shown in the figure, seven) branch breakers 41 are each a circuit breaker configured to break an electric path, for example, when overcurrent (a short-circuit current and an overload current) flows, and the circuit breaker thus has an overcurrent protection function. Note that in the following description, the plurality of branch breakers 41 may be denoted by reference signs "41A", "41B", "41C", "41D", "41E", "41F", and "41G" to distinguish the branch breakers 41 from one another.

The four branch breakers 41A, 41B, 41C, and 41D are electrically connected in parallel to a secondary terminal of one main breaker 40A. That is, the four branch breakers 41A, 41B, 41C, and 41D are provided, on a one-to-one basis, to four branch circuits branched off from the secondary terminal of the main breaker 40A. The remaining three branch breakers 41E, 41F, and 41G are electrically connected in parallel to a secondary terminal of another main breaker 40B. That is, the three branch breakers 41E, 41F, and 41G are provided, on a one-to-one basis, to three branch circuits branched off from the secondary terminal of the main breaker 40B.

A primary terminal of each of the two main breakers 40 (40A and 40B) is electrically connected in parallel to a power grid 8 for commercial use. Note that from the power grid 8 to each of the main breakers 40A and 40B, alternating-current voltages of effective values 100 V and 200 V are supplied by a power distribution method of a single phase three-wire system.

Here, the charge system S 1 and the charge control device 1 are linked to an energy management system (hereinafter abbreviated as an EMS) 5. The EMS 5 measures input currents to be input from the power grid 8 to the primary terminals of the two main breakers 40A and 40B with an ammeter 6 and calculates an average value of electric energy used (average used electric energy) at the business site, for example, every 30 minutes. The EMS 5 issues an alert to the charge control device 1 when a peak value of the input currents within a calculation time period of the average used electric energy exceeds a prescribed threshold. That is, when the peak value of input power exceeds the threshold, the average used electric energy increases, and a maximum usage amount in this month also increases, thereby increasing contract electric power with an electric power company, which increases an electricity tariff. In order to suppress the electricity tariff from increasing, the EMS 5 preferably issues the alert to the charge control device 1 so that the charging current to the charge control device 1 and the charge system is reduced, thereby reducing a power consumption amount.

### (2-2) Details of Charge Facility

As shown in FIG. 2, each charge facility 2 includes a second communicator 20, an energization controller 21, an opening and closing member 22, a vehicle communicator 23, and a connector 24. Note that all of the seven charge facilities 2 have the same configuration, and therefore, in FIG. 2, only one charge facility 2 is shown.

The charge facility 2 is a so-called "normal charge facility". The "normal charge facility" refers to an electrical facility for charging an electric vehicle by connecting an electric path of an alternating current of 250 V or lower to the vehicle (see, "JAPAN ELECTRICAL WIRING SYSTEM INDUSTRIES ASSOCIATION, technical data JWD-T33" Construction Guideline of EV Normal Charge Electrical Facility (second edition)"). Note that the electric vehicle 3 explained in the embodiment corresponds to a so-called "high load electrically driven vehicle" in which the magnitude (current value) of a charging current at the time of normal charging exceeds 6 A (see, "JAPAN ELECTRICAL WIRING SYSTEM INDUSTRIES ASSOCIATION, technical data JWD-T33" Construction Guideline of EV Normal Charge Electrical Facility (second edition)"). Note that the charge facility in the embodiment is not limited to the normal charge facility but may be a so-called "fast charge facility". The "fast charge facility" refers to a charge facility configured to reduce a charging time by supplying a charging current larger than that supplied in the normal charging in accordance with, for example, a charge standard defined by CHAdeMO Association. Note that the standard relating to the fast charge may be a standard (e.g., GBT, CCS) other than the standard defined by CHAdeMO Association. Moreover, the charge control device 1 described below controls the charging current to be supplied from the charge facility 2 to the electric vehicle 3 but may control electric power supplied from a charge facility to the electric vehicle 3.

The connector 24 includes a charge cable and a charge connector. The charge cable has a tip end provided with the charge connector. The charge cable includes a pair of power lines through which the charging current is to flow and a plurality of signal lines for transmitting a control pilot (CPLT) signal which will be described later.

The charge connector is to be removably connected to a charge port (also referred to as a charge inlet) provided to the body of the electric vehicle 3. The charge port is electrically connected to a charging circuit 31 configured to charge the storage battery 30 mounted on the electric vehicle 3. That is, the connector 24 is to be electrically connected to the charging circuit 31 of the electric vehicle 3 via the charge cable and the charge connector. Note that the signal line, which the charge cable has, is to be electrically connected to an Electronic Control Unit (ECU) for charge control mounted on the electric vehicle 3 via the charge connector and the charge port.

The opening and closing member 22 includes: a relay contact inserted in an electric path connecting the secondary terminal of the branch breaker 41 and the charge cable (power line) of the connector 24; and an electromagnetic relay which opens and closes the relay contact. The relay contact is a normally open relay contact. The opening and closing member 22 closes (switches ON) the relay contact by the electromagnetic relay to energize an electric path between the secondary terminal of the branch breaker 41 and the charge cable (power line) of the connector 24.

The second communicator 20 performs data communication with the first communicator 10 (which will be described later) of the charge control device 1 in compliant with, for example, a communication standard for a wired LAN. Note that the second communicator 20 may perform data communication compliant with a communication standard (e.g., communication standard for a wireless LAN) other than that for the wired LAN.

The energization controller 21 includes a microcontroller as a main component and controls the opening and closing member 22 such that the electric path between the secondary terminal of the branch breaker 41 and the charge cable (power line) of the connector 24 is opened and closed.

The vehicle communicator 23 performs data communication with the ECU of the electric vehicle 3 by a CPLT signal flowing through the signal line of the connector 24. The vehicle communicator 23 applies a prescribed voltage to the signal line, and the ECU detects the voltage, thereby detecting that the charge connector of the connector 24 is connected to the charge port. Moreover, the ECU transmits the CPLT signal by changing a line voltage of the signal line to inform the vehicle communicator 23 that the charge connector is connected to the charge port. Then, the vehicle communicator 23 causes the line voltage of the signal line to oscillate at a constant frequency and a constant duty ratio. As a result, the CPLT signal becomes a square wave signal which oscillates at the constant frequency and the constant duty ratio. Moreover, the vehicle communicator 23 causes the second communicator 20 to notify the first communicator 10 of the charge control device 1 that the charge connector is connected to the charge port.

When the ECU confirms that the CPLT signal has become the square wave signal, the ECU then changes the crest value of the CPLT signal to a prescribed voltage. When the vehicle communicator 23 detects that the crest value of the CPLT signal has been changed to the prescribed voltage, the vehicle communicator 23 then notifies the energization controller 21 of the change. When the energization controller 21 receives the notification from the vehicle communicator 23, the energization controller 21 then controls the opening and closing member 22 such that the electric path between the secondary terminal of the branch breaker 41 and the charge cable (power line) of the connector 24 is closed. As a result, the charging current becomes suppliable from the charge facility 2 to the electric vehicle 3.

Here, the vehicle communicator 23 adjusts the duty ratio of the CPLT signal (square wave signal) to notify the ECU of the electric vehicle 3 of the magnitude of the charging current suppliable from the charge facility 2 (referred to as a suppliable value). The ECU controls the charging circuit 31 to cause the charging circuit 31 to charge the storage battery 30 such that the suppliable value notified by the vehicle communicator 23 is not exceeded. When charging the storage battery 30 ends, the ECU then gives, by using the CPLT signal, charge end notification notifying that the charging ends to the vehicle communicator 23 of the charge facility 2.

The vehicle communicator 23 gives the charge end notification received from the ECU to the energization controller 21. When the energization controller 21 receives the charge end notification, the energization controller 21 then stops the electromagnetic relay to open (switch OFF) the relay contact, thereby breaking the electric path between the secondary terminal of the branch breaker 41 and the charge cable (power line) of the connector 24.

The electric vehicle 3 described in the embodiment includes the charging circuit 31 configured to charge the storage battery 30. The storage battery 30 includes a lithium ion storage battery. The charging circuit 31 includes a converter configured to convert an alternating current supplied from the charge facility 2 into a direct current, a constant current circuit configured to convert the direct current output from the converter into a constant current, and the like. The constant current circuit operates such that the charging current to be supplied to the storage battery 30 equals a target value indicated by the ECU.

### (2-3) Details of Charge Control Device

As shown in FIG. 2, the charge control device 1 includes the first communicator 10, the determiner 11, the controller 12, and a third communicator 13.

The first communicator 10 performs data communication with the second communicator 20 of the charge facility 2 in compliant with, for example, a communication standard for a wired LAN. Note that the first communicator 10 may perform data communication compliant with a communication standard (e.g., communication standard for a wireless LAN) other than that for the wired LAN.

The third communicator 13 performs data communication with the EMS 5 in compliant with, for example, a communication standard for a wired LAN. Note that the third communicator 13 may perform data communication compliant with a communication standard (e.g., communication standard for a wireless LAN) other than that for the wired LAN. The third communicator 13 receives an alert transmitted from the EMS 5, for example, when the current value (the magnitude of an input current) measured by the ammeter 6 exceeds a threshold, and the third communicator 13 gives the alert to the controller 12.

The determiner 11 and the controller 12 are constituted by a single computer. Note that the determiner 11 and the controller 12 may be individually constituted by separate computers.

The determiner 11 determines the charging current value to be allocated to each of the plurality of charge facilities 2. Specifically, the determiner 11 makes an allocation of one or more first current values respectively to one or more charge facilities 2 which are included in the plurality of charge facilities 2 and each of which is not supplying the charging current. The determiner 11 makes an allocation of one or more second current values respectively to one or more charge facilities 2 which are included in the plurality of charge facilities 2 and each of which is supplying the charging current. Further, the determiner 11 determines the allocation of the one or more first current values and the allocation of the one or more second current values such that the total of the one or more first current values and the one or more second current values does not exceed an upper limit value which is predetermined. Note that the upper limit value is, for example, a value not exceeding the rated current of the main breaker 40 (40A, 40B).

The controller 12 causes the first communicator 10 to notify each charge facility 2 of the charging current value (the first current value or the second current value) determined by the determiner 11. In each charge facility 2, the second communicator 20 receives the charging current value notified by the first communicator 10. The second communicator 20 gives the charging current value thus received to the energization controller 21. The energization controller 21 stores the charging current value received from the second communicator 20 in a built-in memory of a computer of the energization controller 21. When the connector 24 is connected to the electric vehicle 3, the energization controller 21 then causes the vehicle communicator 23 to notify the ECU of the electric vehicle 3, by using the CPLT signal, of the charging current value (the second current value) stored in the built-in memory. The ECU controls the charging circuit 31 to cause the charging circuit 31 to charge the storage battery 30 such that the charging current value (the second current value) notified by the vehicle communicator 23 is not exceeded. That is, the second current value corresponds to the suppliable value.

### (3) Operation of Charge Control Device

Next, the operation of the charge control device 1 will be described in detail while examples of specific numerical values are shown.

Table 1 shows a data table stored in a built-in memory of the computer constituting the determiner 11 of the charge control device 1. In the data table, "Charge Facility No." is a sign for distinguishing the plurality of charge facilities 2 from one another. In Table 1, the reference signs "2A", "2B", "2C", "2D", "2E", "2F", and "2G" denoting the charge facilities 2 are deemed to be Charge Facility No.

Moreover, "Group No." includes number "1" corresponding to a first group and number "2" corresponding to a second group. To the first group, the four charge facilities 2A, 2B, 2C, and 2D belongs. The four charge facilities 2A, 2B, 2C, and 2D are connected in parallel to the secondary terminal of the main breaker 40A respectively via the four branch breakers 41A, 41B, 41C, and 41D. To the second group, the three charge facilities 2E, 2F, and 2G belongs. The charge facilities 2E, 2F, and 2G are connected in parallel to the secondary terminal of the main breaker 40B respectively via the three branch breakers 41E, 41F, and 41G.

Moreover, in Table 1, "Upper Limit Value" corresponding to the first group is set to a value (54 A) obtained by subtracting a 10% margin from the rated current (60 A) of, for example, the main breaker 40A. The "Upper Limit Value" corresponding to the second group is, for example, set to a value (36 A) obtained by subtracting a 10% margin from the rated current (40 A) of the main breaker 40B. Note that the margin subtracted from the rated current is not limited to 10%. Moreover, the margin does not have to be subtracted from the rated current.

**[Table 1]**

| Charge Facility No. | Group No. | Upper Limit Value |
|---|---|---|
| 2A | 1 | 54 A |
| 2B | 1 | |
| 2C | 1 | |
| 2D | 1 | |
| 2E | 2 | 36 A |
| 2F | 2 | |
| 2G | 2 | |

Subsequently, specific operation of the charge control device 1 will be described with reference to Table 2. Note that controlling the four charge facilities 2A, 2B, 2C, and 2D belonging to the first group will be described below, and the charge facilities 2E, 2F, and 2G belonging to the second group are controllable in a similar manner.

In Table 2, "Charge Facility No." shows the four charge facilities 2A, 2B, 2C, and 2D belonging to the first group. Moreover, "Scene No." in Table 2 represents supply situations of the charging currents of the four charge facilities 2A, 2B, 2C, and 2D. That is, Scene No. 1 corresponds to a situation where all of the four charge facilities 2A, 2B, 2C, and 2D are not supplying the charging currents. Scene No. 2 corresponds to a situation where one charge facility 2Ais supplying the charging current and remaining three charge facilities 2B, 2C, and 2D are not supplying the charging currents. Scene No. 3 corresponds to a situation where two charge facilities 2A and 2B are supplying the charging currents and remaining two charge facilities 2C and 2D are not supplying the charging currents. Scene No. 4 corresponds to a situation where three charge facilities 2A, 2B, and 2C are supplying the charging currents and the remaining one charge facility 2D is not supplying the charging current. Scene No. 5 corresponds to a situation where all of the four charge facilities 2A, 2B, 2C, and 2D are supplying the charging currents. Thus, Table 2 shows the charging current values (the first current value(s) and/or the second current value(s)) to be allocated to the four charge facilities 2A, 2B, 2C, and 2D in each scene.

**[Table 2]**

| Charge Facility No. | Scene No. | | | | |
|---|---|---|---|---|---|
| | 1 | 2 | 3 | 4 | 5 |
| 2A | (6 A) | 30 A | 21 A | 16 A | 13.5 A |
| 2B | (6 A) | 0 (6 A) | 21 A | 16 A | 13.5 A |
| 2C | (6 A) | 0 (6 A) | 0 (6 A) | 16 A | 13.5 A |
| 2D | (6 A) | 0 (6 A) | 0 (6 A) | 0 (6 A) | 13.5 A |
| Total | 0 A | 30 A | 42 A | 48 A | 54 A |

### (3-1) Scene No. 1

In Scene No. 1, all of the four charge facilities 2A, 2B, 2C, and 2D are not supplying the charging currents. Note that the case where the charge facility 2 is not supplying the charging current is, for example, that the connector 24 is not connected to the charge port of the electric vehicle 3 or that the connector 24 is connected to the charge port but charging of the electric vehicle 3 has ended. In each case, as long as the opening and closing member 22 of the charge facility 2 breaks the electric path, it is assumed that the charging current is not supplied from the charge facility 2 to the electric vehicle 3.

The controller 12 of the charge control device 1 stores state flags in the built-in memory of the computer. The state flags show states (open/close) of the opening and closing members 22 of the charge facilities 2A, 2B, 2C, and 2D. For example, the state flag of a charge facility 2 whose opening and closing member 22 is open is 0, whereas the state flag of a charge facility 2 whose opening and closing member 22 is closed is 1. Note that the state flag of each of the charge facilities 2A, 2B, 2C, and 2D is changed by the controller 12 each time a change in the state of the opening and closing member 22 is notified by the energization controller 21 via the first communicator 10 and the second communicator 20.

The determiner 11 reviews the state flag of each of the charge facilities 2A, 2B, 2C, and 2D. Since all the state flags are 0, the determiner 11 determines that each of the charge facilities 2A, 2B, 2C, and 2D is not supplying the charging current. The determiner 11 determines the charging current values to be allocated to the charge facilities 2A, 2B, 2C, and 2D each of which is not supplying the charging current to be the first current values. Note that the determiner 11 determines 6 A to be the first current value, where 6 A is the reference value of the charging current at the time of normal charging of the electric vehicle 3 corresponding to the high load electrically driven vehicle. Note that the first current value is not limited to 6 A.

The determiner 11 notifies the controller 12 of the charging current value (the first current value) to be allocated to each of the charge facilities 2A, 2B, 2C, and 2D. The controller 12 generates transmission data for notifying of the charging current value (the first current value) determined by the determiner 11 for each of the charge facilities 2A, 2B, 2C, and 2D and gives the transmission data to the first communicator 10. The first communicator 10 generates a frame including the transmission data given from the controller 12 for each of the charge facilities 2A, 2B, 2C, and 2D. The first communicator 10 transmits the frame thus generated to the second communicator 20 of each of the charge facilities 2A, 2B, 2C, and 2D.

The second communicator 20 of each of the charge facilities 2A, 2B, 2C, and 2D acquires the transmission data from the frame received from the first communicator 10 of the charge control device 1 and gives the transmission data thus acquired to the energization controller 21. The energization controller 21 stores, in the built-in memory, the charging current value (the first current value) included in the transmission data acquired from the second communicator 20. Note that each of the charge facilities 2A, 2B, 2C, and 2D is not supplying the charging current, and therefore, a total load current (charging current) flowing from the main breaker 40A to the four branch circuits is 0 A (see Table 2).

### (3-2) Scene No. 2

Suppose that Scene No. 1 transitions to Scene No. 2. In Scene No. 2, the electric vehicle 3 is connected to the connector 24 of one charge facility 2A. When the energization controller 21 of the charge facility 2A is notified by the vehicle communicator 23 that the connector 24 is connected to the electric vehicle 3, the energization controller 21 controls the opening and closing member 22 to close the electric path. Moreover, the energization controller 21 of the charge facility 2A causes the vehicle communicator 23 to notify the ECU of the electric vehicle 3, by the CPLT signal, of the charging current value (first current value) stored in the built-in memory as the suppliable value. That is, the charging circuit 31 of the electric vehicle 3 connected to the charge facility 2A starts charging the storage battery 30 such that the charging current does not exceed the first current value (6 A).

When the opening and closing member 22 of the charge facility 2A changes from being open to being closed, the controller 12 of the charge control device 1 changes the state flag of the charge facility 2A from 0 to 1.

The determiner 11 reviews the state flag of each of the charge facilities 2A, 2B, 2C, and 2D. Since the state flag of the charge facility 2A has been changed to 1, the determiner 11 determines that the charge facility 2A has started supplying the charging current. Then, the determiner 11 determines the charging current values to be allocated to the other three charge facilities 2B, 2C, and 2D which are not supplying the charging currents to be the first current values. On the other hand, since the number of charge facility 2 that is supplying the charging current is only one, that is, only the charge facility 2A is supplying the charging current, the determiner 11 changes the charging current value to be allocated to the charge facility 2A from the first current value (6 A) to the second current value. The second current value is, for example, 30 A which is the maximum value of the charging current of the charge facility 2.

The determiner 11 notifies the controller 12 of the charging current values (the first current values and the second current value) to be allocated to the charge facilities 2A, 2B, 2C, and 2D. The controller 12 generates transmission data for notifying of the charging current values (the first current values and the second current value) determined by the determiner 11 for the charge facilities 2A, 2B, 2C, and 2D and gives the transmission data to the first communicator 10. The first communicator 10 generates a frame including the transmission data given from the controller 12 for each of the charge facilities 2A, 2B, 2C, and 2D. The first communicator 10 transmits the frame thus generated to the second communicator 20 of each of the charge facilities 2A, 2B, 2C, and 2D.

The second communicator 20 of each of the charge facilities 2A, 2B, 2C, and 2D acquires the transmission data from the frame received from the first communicator 10 of the charge control device 1 and gives the transmission data thus acquired to the energization controller 21. The energization controller 21 stores, in the built-in memory, the charging current value (the first current value or the second current value) included in the transmission data acquired from the second communicator 20.

The energization controller 21 of the charge facility 2A then causes the vehicle communicator 23 to notify the ECU of the electric vehicle 3, by the CPLT signal, of the second current value (30 A) stored in the built-in memory as the suppliable value. Then, the ECU of the electric vehicle 3 controls the charging circuit 31 to cause the charging circuit 31 to charge the storage battery 30 such that the charging current value (the second current value) notified by the vehicle communicator 23 is not exceeded. Note that the remaining three charge facilities 2B, 2C, and 2D are not supplying the charging currents, and therefore, a total load current (charging current) flowing from the main breaker 40A to the four branch circuits is a maximum of 30 A (see Table 2).

### (3-3) Scene No. 3

Suppose Scene No. 2 transitions to Scene No. 3. In Scene No. 3, an electric vehicle 3 is newly connected to the connector 24 of another charge facility 2B. Note that the charge facility 2A continues charging the electric vehicle 3.

When the energization controller 21 of the charge facility 2B is notified by the vehicle communicator 23 that the connector 24 is connected to the electric vehicle 3, the energization controller 21 controls the opening and closing member 22 to close the electric path. Moreover, the energization controller 21 of the charge facility 2B causes the vehicle communicator 23 to notify the ECU of the electric vehicle 3, by the CPLT signal, of the charging current value (first current value) stored in the built-in memory as the suppliable value. That is, the charging circuit 31 of the electric vehicle 3 connected to the charge facility 2B starts charging the storage battery 30 such that the charging current does not exceed the first current value (6 A). At this time, the value of a total charging current of the two charge facilities 2A and 2B is a maximum of 36 A, which is a value satisfactorily smaller than the upper limit value (54 A), and therefore, the main breaker 40A does not trip due to the overcurrent protection function.

When the opening and closing member 22 of the charge facility 2B changes from being open to being closed, the controller 12 of the charge control device 1 changes the state flag of the charge facility 2B from 0 to 1.

The determiner 11 reviews the state flag of each of the charge facilities 2A, 2B, 2C, and 2D. Since the state flag of the charge facility 2B has been changed to 1, the determiner 11 determines that the charge facility 2B has started supplying the charging current. Then, the determiner 11 determines the charging current values to be allocated to the other two charge facilities 2C and 2D which are not supplying the charging currents to be the first current values. On the other hand, the determiner 11 changes the charging current value to be allocated to the charge facility 2B which has newly started supplying the charging current from the first current value (6 A) to the second current value. Note that the number of charge facilities 2 which are supplying the charging currents increases to two, and therefore, the determiner 11 changes the charging current value (the second current value) to be allocated to the charge facility 2A, which has been supplying the charging current. For example, the determiner 11 determines the charging current value (the second current value) to be allocated to the charge facility 2A to be 21 A by reducing the charging current value by a value obtained by adding 3 A to the reference value (6 A) of the charging current. The determiner 11 also determines the charging current value (the second current value) to be allocated to the charge facility 2B to be the same value (21 A). Note that the charging current values to be allocated to the remaining two charge facilities 2C and 2D are not changed from the first current values (6 A).

The determiner 11 notifies the controller 12 of the charging current values (second current values) to be allocated to the two charge facilities 2A and 2B whose charging current values are to be changed. The controller 12 generates transmission data for notifying of the charging current values (second current values) determined by the determiner 11 for the charge facilities 2A and 2B. The controller 12 then gives, to the first communicator 10, the transmission data for notifying of the second current value assigned to the charge facility 2A whose second current value before the change is larger (30 A). The first communicator 10 generates a frame including the transmission data given from the controller 12 and transmits the frame thus generated to the second communicator 20 of the charge facility 2A.

The second communicator 20 of the charge facility 2A acquires the transmission data from the frame received from the first communicator 10 of the charge control device 1 and gives the transmission data thus acquired to the energization controller 21. The energization controller 21 stores, in the built-in memory, the charging current value (second current value) included in the transmission data thus received from the second communicator 20.

The energization controller 21 of the charge facility 2A then causes the vehicle communicator 23 to notify the ECU of the electric vehicle 3, by the CPLT signal, of the second current value (21 A) stored in the built-in memory as the suppliable value. The ECU of the electric vehicle 3 connected to the charge facility 2A controls the charging circuit 31 to cause the charging circuit 31 to charge the storage battery 30 such that the charging current value (second current value: 21 A) notified by the vehicle communicator 23 is not exceeded.

Subsequently, the controller 12 gives, to the first communicator 10, the transmission data for notifying of the second current value (21 A) assigned to the charge facility 2B whose second current value before the change is smaller (6 A). The first communicator 10 generates a frame including the transmission data given from the controller 12 and transmits the frame thus generated to the second communicator 20 of the charge facility 2B.

The second communicator 20 of the charge facility 2B acquires the transmission data from the frame received from the first communicator 10 of the charge control device 1 and gives the transmission data thus acquired to the energization controller 21. The energization controller 21 stores, in the built-in memory, the charging current value (second current value) included in the transmission data thus received from the second communicator 20.

The energization controller 21 of the charge facility 2B then causes the vehicle communicator 23 to notify the ECU of the electric vehicle 3, by the CPLT signal, of the second current value (21 A) stored in the built-in memory as the suppliable value. The ECU of the electric vehicle 3 connected to the charge facility 2B controls the charging circuit 31 to cause the charging circuit 31 to charge the storage battery 30 such that the charging current value (second current value: 21 A) notified by the vehicle communicator 23 is not exceeded. Note that the remaining two charge facilities 2C and 2D which are not supplying the charging currents, and therefore, a total load current (charging current) flowing from the main breaker 40A to the four branch circuits is a maximum of 42 A (see Table 2).

Thus, to change the allocation of the charging current values in a direction in which the total load current increases, changing (reducing) the charging current values sequentially from the charge facility whose charging current value before the change is larger as described above can prevent the total load current from exceeding the upper limit value.

### (3-4) Scene No. 4

Suppose that Scene No. 3 transitions to Scene No. 4. In Scene No. 4, an electric vehicle 3 is newly connected to the connector 24 of another charge facility 2C. Note that the two charge facilities 2A and 2B continue charging the electric vehicles 3.

When the energization controller 21 of the charge facility 2C is notified by the vehicle communicator 23 that the connector 24 is connected to the electric vehicle 3, the energization controller 21 controls the opening and closing member 22 to close the electric path. Moreover, the energization controller 21 of the charge facility 2C causes the vehicle communicator 23 to notify the ECU of the electric vehicle 3, by the CPLT signal, of the charging current value (first current value) stored in the built-in memory as the suppliable value. That is, the charging circuit 31 of the electric vehicle 3 connected to the charge facility 2C starts charging the storage battery 30 such that the charging current does not exceed the first current value (6 A). At this time, the value of a total charging current of the three charge facilities 2A, 2B, and 2C is a maximum of 48 A, which is a value lower than or equal to the upper limit value (54 A), and therefore, the main breaker 40A does not trip due to the overcurrent protection function.

When the opening and closing member 22 of the charge facility 2C changes from being open to being closed, the controller 12 of the charge control device 1 changes the state flag of the charge facility 2C from 0 to 1.

The determiner 11 reviews the state flag of each of the charge facilities 2A, 2B, 2C, and 2D. Since the state flag of the charge facility 2C has been changed to 1, the determiner 11 determines that the charge facility 2C has started supplying the charging current. The determiner 11 determines the charging current value to be allocated to the other one charge facility 2D which is not supplying the charging current to be the first current value. On the other hand, the determiner 11 changes the charging current value to be allocated to the charge facility 2C which has newly started supplying the charging current from the first current value (6 A) to the second current value. Note that the number of charge facilities 2 which are supplying the charging currents increases to three, and therefore, the determiner 11 changes the charging current values (second current values) to be allocated to the two charge facilities 2A and 2B, which have been supplying the charging currents. For example, the determiner 11 determines the charging current values (second current values) to be allocated to the two charge facilities 2A and 2B each to be 16 A by reducing the charging current value by (5 A) which is less than the reference value (6 A) of the charging current by 1 A. The determiner 11 also determines the charging current value (second current value) to be allocated to the charge facility 2C to be the same value (16 A). Note that the charging current value to be allocated to the remaining one charge facility 2D is not changed from the first current value (6 A).

The determiner 11 notifies the controller 12 of the charging current values (second current values) to be allocated to the three charge facilities 2A, 2B, and 2C whose charging current values are to be changed. The controller 12 generates transmission data for notifying of the charging current values (second current values) determined by the determiner 11 for the charge facilities 2A, 2B, and 2C. The controller 12 then gives, to the first communicator 10, the transmission data for notifying of the second current values assigned to the charge facilities 2A and 2B whose second current values before the change are larger (21A). The first communicator 10 generates a frame including the transmission data given from the controller 12 for each of the charge facilities 2A and 2B and transmits the frame thus generated to the second communicator 20 of each of the charge facilities 2A and 2B.

The second communicator 20 of each of the charge facilities 2A and 2B acquires the transmission data from the frame received from the first communicator 10 of the charge control device 1 and gives the transmission data thus acquired to the energization controller 21. The energization controller 21 stores, in the built-in memory, the charging current value (second current value) included in the transmission data thus received from the second communicator 20.

The energization controller 21 of each of the two charge facilities 2A and 2B causes the vehicle communicator 23 to inform the ECU of the electric vehicle 3, by the CPLT signal, of the second current value (16 A) stored in the built-in memory as the suppliable value. The ECUs of the two electric vehicles 3 each control the charging circuit 31 to cause the charging circuit 31 to charge the storage battery 30 such that the charging current value (second current value: 16 A) notified by the vehicle communicator 23 is not exceeded.

Subsequently, the controller 12 gives, to the first communicator 10, the transmission data for notifying of the second current value (16 A) assigned to the charge facility 2C whose second current value before the change is smaller (6 A). The first communicator 10 generates a frame including the transmission data given from the controller 12 and transmits the frame thus generated to the second communicator 20 of the charge facility 2C.

The second communicator 20 of the charge facility 2C acquires the transmission data from the frame received from the first communicator 10 of the charge control device 1 and gives the transmission data thus acquired to the energization controller 21. The energization controller 21 stores, in the built-in memory, the charging current value (second current value) included in the transmission data thus received from the second communicator 20.

The energization controller 21 of the charge facility 2C then causes the vehicle communicator 23 to notify the ECU of the electric vehicle 3, by the CPLT signal, of the second current value (16 A) stored in the built-in memory as the suppliable value. The ECU of the electric vehicle 3 connected to the charge facility 2C controls the charging circuit 31 to cause the charging circuit 31 to charge the storage battery 30 such that the charging current value (second current value: 16 A) notified by the vehicle communicator 23 is not exceeded. Note that the remaining one charge facility 2D is not supplying the charging current, and therefore, a total load current (charging current) flowing from the main breaker 40A to the four branch circuits is a maximum of 48 A (see Table 2).

### (3-5) Scene No. 5

Suppose that Scene No. 4 transitions to Scene No. 5. In Scene No. 5, an electric vehicle 3 is newly connected to the connector 24 of another charge facility 2D, and all of the four charge facilities 2A, 2B, 2C, and 2D supply the charging currents.

When the energization controller 21 of the charge facility 2D is notified by the vehicle communicator 23 that the connector 24 is connected to the electric vehicle 3, the energization controller 21 controls the opening and closing member 22 to close the electric path. Moreover, the energization controller 21 of the charge facility 2D causes the vehicle communicator 23 to notify the ECU of the electric vehicle 3, by the CPLT signal, of the charging current value (first current value) stored in the built-in memory as the suppliable value. That is, the charging circuit 31 of the electric vehicle 3 connected to the charge facility 2D starts charging the storage battery 30 such that the charging current does not exceed the first current value (6 A). At this time, the value of a total charging current of the four charge facilities 2A, 2B, 2C, and 2D is a maximum of 54 A, which is a value less than or equal to the upper limit value (54 A), and therefore, the main breaker 40A does not trip due to the overcurrent protection function.

When the opening and closing member 22 of the charge facility 2D changes from being open to being closed, the controller 12 of the charge control device 1 changes the state flag of the charge facility 2D from 0 to 1.

The determiner 11 reviews the state flag of each of the charge facilities 2A, 2B, 2C, and 2D. Since the state flag of the charge facility 2D has been changed to 1, the determiner 11 determines that the charge facility 2D has started supplying the charging current. The determiner 11 changes the charging current value to be allocated to the charge facility 2D which has newly started supplying the charging current from the first current value (6 A) to the second current value. Note that the number of charge facilities 2 which are supplying the charging currents increases to four, and therefore, the determiner 11 changes the charging current values (second current values) to be allocated to the three charge facilities 2A, 2B, and 2C, which have been supplying the charging currents. For example, the determiner 11 determines the charging current values (second current values) to be allocated to the three charge facilities 2A, 2B, and 2C each to be a value (13.5 A) obtained by dividing the upper limit value (54 A) into four equal parts. The determiner 11 also determines the charging current value (second current value) to be allocated to the charge facility 2D to be the same value (13.5 A).

The determiner 11 notifies the controller 12 of the charging current values (second current values) to be allocated to the charge facilities 2A, 2B, 2C, and 2D. The controller 12 generates transmission data for notifying of the charging current value (second current value) determined by the determiner 11 for each of the charge facilities 2A, 2B, 2C, and 2D. The controller 12 then gives, to the first communicator 10, the transmission data for notifying of the second current values assigned to the charge facilities 2A, 2B, and 2C whose second current values before the change are larger (16 A). The first communicator 10 generates a frame including the transmission data given from the controller 12 for each of the charge facilities 2A, 2B, and 2C and transmits the frame thus generated to the second communicator 20 of each of the charge facilities 2A, 2B, and 2C.

The second communicator 20 of each of the charge facilities 2A, 2B, and 2C acquires the transmission data from the frame received from the first communicator 10 of the charge control device 1 and gives the transmission data thus acquired to the energization controller 21. The energization controller 21 stores, in the built-in memory, the charging current value (second current value) included in the transmission data thus received from the second communicator 20.

The energization controller 21 of each of the three charge facilities 2A, 2B, and 2C causes the vehicle communicator 23 to inform the ECU of the electric vehicle 3, by the CPLT signal, of the second current value (13.5 A) stored in the built-in memory as the suppliable value. The ECUs of the three electric vehicles 3 each control the charging circuit 31 to cause the charging circuit 31 to charge the storage battery 30 such that the charging current value (second current value: 13.5 A) notified by the vehicle communicator 23 is not exceeded.

Subsequently, the controller 12 gives, to the first communicator 10, the transmission data for notifying of the second current value (13.5 A) assigned to the charge facility 2D whose second current value before the change is smaller (6 A). The first communicator 10 generates a frame including the transmission data given from the controller 12 and transmits the frame thus generated to the second communicator 20 of the charge facility 2D.

The second communicator 20 of the charge facility 2D acquires the transmission data from the frame received from the first communicator 10 of the charge control device 1 and gives the transmission data thus acquired to the energization controller 21. The energization controller 21 stores, in the built-in memory, the charging current value (second current value) included in the transmission data thus received from the second communicator 20.

The energization controller 21 of the charge facility 2D then causes the vehicle communicator 23 to notify the ECU of the electric vehicle 3, by the CPLT signal, of the second current value (13.5 A) stored in the built-in memory as the suppliable value. The ECU of the electric vehicle 3 connected to the charge facility 2D controls the charging circuit 31 to cause the charging circuit 31 to charge the storage battery 30 such that the charging current value (second current value: 13.5 A) notified by the vehicle communicator 23 is not exceeded. Note that all of the charge facilities 2 are supplying the charging currents, and therefore, a total of load current (charging current) flowing from the main breaker 40A to the four branch circuits is a maximum of 54 A (see Table 2).

Here, in each of Scene No. 2 to Scene No. 5, the third communicator 13 of the charge control device 1 is supposed to receive an alert from the EMS 5. The third communicator 13 gives the alert thus received to the controller 12. In accordance with the alert thus given, the controller 12 instructs the determiner 11 to determine the charging current values such that the value of a total charging current decreases.

For example, the determiner 11 reduces the charging current values (second current values) to be allocated to the four charge facilities 2A, 2B, 2C, and 2D uniformly by 1A. Note that the determiner 11 does not have to uniformly reduce the charging current values (second current values) to be allocated to the four charge facilities 2A, 2B, 2C, and 2D but may reduce only the charging current value(s) (second current value(s)) to be allocated to one, two, or three charge facilities 2.

As described above, the charge control device 1 allocates the charging current value (first current value) also to the charge facility 2 which is not supplying the charging current, and when the charge facility 2 newly starts charging the charging current, the charge control device 1 supplies the charging current to the charge facility 2 such that the first current value is not exceeded. Therefore, the charge control device 1 enables the storage battery 30 mounted on each of the plurality of electric vehicles 3 to be appropriately charged while a rapid increase in the charging current is prevented. Note that when there are a plurality of charge facilities 2 which are not supplying the charging currents, the charge control device 1 may assign the first current value of 6 A to at least one of the charge facilities 2, and the charge control device 1 does not have to uniformly assign the first current value of 6 A to each of the plurality of charge facilities 2.

Incidentally, in the charge control device 1, the determiner 11 preferably reduces, when the difference between a total value of the second current value(s) and the upper limit value is less than or equal to a prescribed margin value, the second current value allocated to at least one charge facility 2.

For example, when the upper limit value is set to the rated current (60 A) of the main breaker 40A, the determiner 11 reduces the second current value(s) to be allocated to the one or more charge facilities 2 each supplying the charging current when the difference between the total value of the second current value(s) and the upper limit value is less than or equal to the prescribed margin value (e.g., 6 A).

As a result, the charge control device 1 can avoid that the value of a total charging current exceeds the upper limit value and that the main breaker 40A breaks the electric path.

Note that in each charge facility 2, the charging current (first current value) allocated from the charge control device 1 is stored in a built-in memory (built-in memory of a computer included in the energization controller 21). Therefore, even when communication between the charge control device 1 and the charge facility 2 is lost, the energization controller 21 of the charge facility 2 can notify the ECU of the electric vehicle 3 of the first current value (6 A) stored in the built-in memory as the suppliable value when supplying the charging current is newly started. As a result, even in a state where the communication between the charge control device 1 and each charge facility 2 is lost, the electric vehicle 3 connected to each charge facility 2 can be charged without exceeding the rated current of the main breaker 40A, 40B. Note that once the communication between the charge control device 1 and each charge facility 2 is restored, the charging current can be rapidly allocated from the charge control device 1 to each charge facility 2.

### (4) Variation of Charge Control Device According to Embodiment

Next, some variations of the charge control device 1 according to the embodiment. However, since basic components of the variations described below are common with that of the embodiment, components common with those in the embodiment are denoted by the same reference signs, and the description and drawings thereof are accordingly omitted.

### (4-1) First Variation

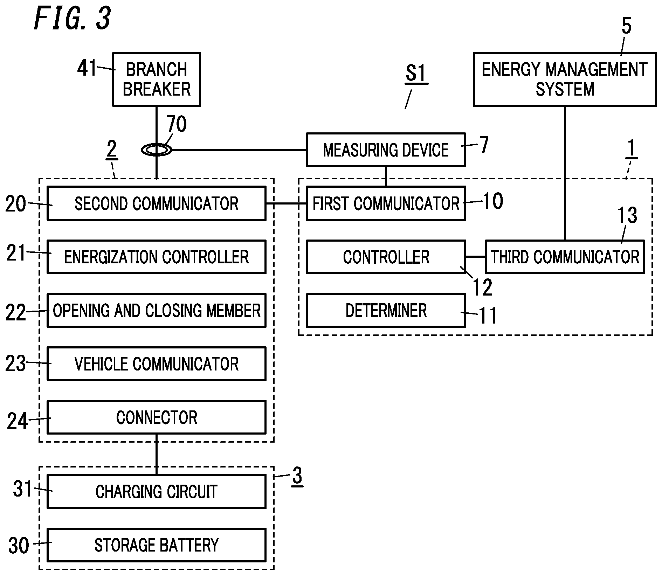

A charge control device 1 of a first variation is different from that of the embodiment in that the charge control device 1 of the first variation includes a measuring device 7 as shown in FIG. 3. The measuring device 7 includes a plurality of current sensors 70. The plurality of current sensors 70 are each configured to output a voltage proportional to a current (load current) flowing from a branch breaker 41 to a charge facility 2. Note that FIG. 3 shows only one of a plurality of branch breakers 41 and only one of a plurality of charge facilities 2.

The measuring device 7 measures, from voltages output from the plurality of current sensors 70, respective load currents flowing to a plurality of branch circuits. Note that the magnitude (current value) of the load current of each branch circuit is substantially equal to the magnitude (current value) of a charging current supplied from each charge facility 2 to a corresponding electric vehicle 3. That is, the measuring device 7 measures the load current of the branch circuit, thereby measuring the charging current supplied from the charge facility 2 to the electric vehicle 3. The measuring device 7 transmits the measured value of the load current (charging current) of each charge facility 2 to a first communicator 10.

The first communicator 10 gives the measured value of the charging current received from the measuring device 7 to a controller 12. The controller 12 compares a charging current value (second current value) to be allocated to each charge facility 2 with the measured value of the charging current of each charge facility 2, that is, the current value of the charging current actually supplied from each charge facility 2 to the electric vehicle 3. Then, the controller 12 gives the comparison result to a determiner 11.

The determiner 11 accordingly changes, based on the comparison result received from the controller 12, the charging current value (second current value) to be allocated to each charge facility 2.

For example, suppose the situation of Scene No. 4 explained above, that is, the situation where three charge facilities 2A, 2B, and 2C are supplying the charging currents, and one charge facility 2D is not supplying the charging current.

In this case, the determiner 11 determines the charging current value (second current value) to be allocated to each of the three charge facilities 2A, 2B, and 2C to be 18 A and the charging current value (first current value) to be allocated to the charge facility 2D to be 6 A (see Table 3).

**[Table 3]**

| Charge Facility No. | Second Current Value (Before Change) | Measured Value | Second Current Value (After Change) |
|---|---|---|---|
| 2A | 18 A | 18 A | 22 A |
| 2B | 18 A | 18 A | 22 A |
| 2C | 18 A | 10 A | 10 A |
| 2D | (6 A) | 0 A | (6 A) |
| Total | 54 A | 46 A | 54 A |

Here, the measured values of the charging currents of the charge facilities 2A, 2B, 2C, and 2D by the measuring device 7 are supposed to be 18 A, 18 A, 10 A, and 0 A. That is, for the two charge facilities 2A and 2B, the allocation (second current value) determined by the determiner 11 matches the measured value of each charging current, but for the charge facility 2C, the measured value (10 A) is smaller than the second current value (18 A) by 40% or more. As a result, a total charging current of the four charge facilities 2A, 2B, 2C, and 2D is likewise reduced.

Thus, the determiner 11 changes the second current values such that the charging current values (second current values) to be allocated to the two charge facilities 2A and 2B increases. For example, the determiner 11 divides the margin (54 A - 46 A = 8 A) of the total value into equal parts and preferably adds 4 A to the second current value (18 A) for each of the two charge facilities 2A and 2B to increase the second current value to 22 A. Note that the determiner 11 may add 8 A to the second current value for one charge facility 2A (or 2B) to increase the second current value to 26 A.

In each of the two charge facilities 2A and 2B, the second current value (suppliable value) thus changed is transmitted by a CPLT signal to an ECU of the electric vehicle 3. Thus, in the electric vehicles 3 supplied with the charging currents from the two charge facilities 2A and 2B, charging storage batteries 30 with increased charging currents enables a charging time to be reduced.

Thus, the charge control device 1 of the first variation acquires the measured values of the charging currents supplied from the plurality of charge facilities 2, and when the total value of the measured values thus acquired is smaller than the total value of the second current value(s), the determiner 11 increases the second current value allocated to at least one charge facility. As a result, the charge control device 1 of the first variation enables the storage battery 30 mounted on each of the plurality of electric vehicles 3 to be more appropriately charged while a rapid increase in the charging current is prevented.

### (4-2) Second Variation

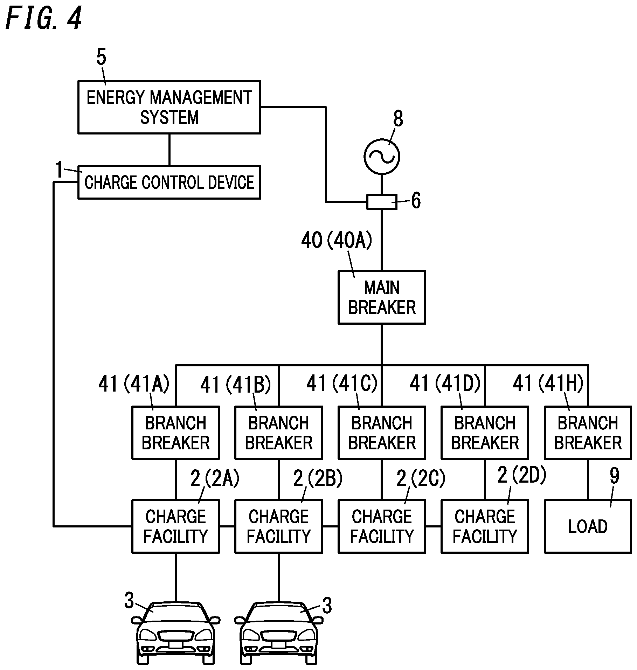

Next, a second variation of the charge control device 1 according to the embodiment will be described. In a charge system S1 including a charge control device 1 of the second variation, a load other than the charge facilities 2 is connected to a branch circuit branched off from a main breaker 40A (see FIG. 4).

To a secondary terminal of the main breaker 40A, a fifth branch breaker 41(41H) is electrically connected, and to a secondary terminal of the branch breaker 41H, the load 9 is electrically connected. That is, to a first group, five branch breakers 41A, 41B, 41C, 41D, and 41H belong.

The load 9 is a general electric appliance examples of which include office machinery such as a lighting fixture and a photocopier. Note that in FIG. 4, only one load 9 and only one branch breaker 41H connected to the load 9 are shown, but a plurality of loads and a plurality of branch breakers may be connected to the secondary terminal of the main breaker 40A.

In the charge control device 1 of the second variation, an upper limit value corresponding to the first group is set to a value (e.g., 50 A) obtained by subtracting a consumption current of the load 9 and a margin of 10% from the rated current (60 A) of the main breaker 40A. Note that the load 9 is basically used during business hours and is considered not to be used outside of the business hours. Thus, an upper limit value during the business hours and an upper limit value outside of the business hours of a business site may be set to different values. For example, the upper limit value during the business hours may be set to 50 A, and the upper limit value outside of the business hours may be set to 54 A.

A determiner 11 of the charge control device 1 of the second variation determines the allocation such that a total value of the load current flowing to the load 9, the first current value, and the second current value does not exceed the upper limit value. Thus, even when the load current is supplied to the load 9 other than the charge facilities 2, the charge control device 1 of the second variation enables a storage battery 30 of each of a plurality of electric vehicles 3 to be appropriately charged.

### (4-3) Third Variation

A charge control device 1 of a third variation has a feature that whether or not a plurality of charge facilities 2 are charged with priority can be set.

For example, in the charge control device 1, one charge facility 2A of four charge facilities 2A, 2B, 2C, and 2D is supposed to be set to be charged with priority (see Table 4). Note that

Table 4 is based on Table 2, to which item "Priority Setting" is added. Under the item "Priority Setting", "1" shows that the charge facility is set to perform charging with priority, whereas "0" shows that the charge facility is not set to be charged with priority.

A determiner 11 of the charge control device 1 fixes, to 30 A, the charging current value (second current value) to be assigned to the charge facility 2A to which a priority is set in each of Scene No. 2 to Scene No. 5. The determiner 11 then determines the charging current value to be assigned to each of the charge facilities 2B, 2C, and 2D such that the total of the charging current values (second current values) to be assigned to the three charge facilities 2B, 2C, and 2D does not exceed a value (24 A) obtained by subtracting 30 A from an upper limit value (54 A). Note that the number of charge facilities 2 to which priorities are set is not limited to one.

**[Table 4]**

| Charge Facility No. | Priority Setting | Scene No. | | | | |
|---|---|---|---|---|---|---|
| | | 1 | 2 | 3 | 4 | 5 |
| 2A | 1 | (6 A) | 30A | 30 A | 30 A | 30 A |
| 2B | 0 | (6 A) | 0(6A) | 18 A | 9 A | 8 A |
| 2C | 0 | (6 A) | 0(6A) | 0 (6 A) | 9 A | 8 A |
| 2D | 0 | (6 A) | 0(6A) | 0 (6 A) | 0 (6 A) | 8 A |
| Total | | 0 A | 30A | 48 A | 48 A | 54 A |

For example, to reduce a charging time for an electric vehicle 3 which is frequently used, the electric vehicle 3 is connected to, and charged by, the charge facility 2A to which the priority is set, thereby reducing the charging time as compared with the case where the electric vehicle 3 is connected to any of the charge facilities 2B, 2C, and 2D to which no priority is set.

### (4-4) Fourth Variation

A charge control device 1 of a fourth variation has a feature that a charging current value to be assigned to each of a plurality of charge facilities 2 is determined within a range in which supply electric power in the charge facilities 2 does not exceed an upper limit value.

A determiner 11 in the fourth variation calculates the supply electric power by multiplying the effective value (200 V) of an alternating-current voltage supplied from a power grid 8 by the charging current value. For example, the rated power (rated supply electric power) of charge facilities 2A, 2B, and 2D is calculated by multiplying the rated value 30 A of the charging current by 200 V and is thus 6 kW. Moreover, the rated power of the charge facility 2C is calculated by multiplying the rated value 16A of the charging current by 200 V, and is thus 3.2 kW.

Here, a maximum electric power consumable by the four charge facilities 2A, 2B, 2C, and 2D is supposed to be 13 kW. The determiner 11 determines the charging current value to be assigned to each of the charge facilities 2A, 2B, 2C, and 2D at least such that the total of the supply electric power of the four charge facilities 2A, 2B, 2C, and 2D does not exceed the maximum electric power (13 kW).

**[Table 5]**

| Charge Facility No. | Scene No. | | | | |
|---|---|---|---|---|---|
| | 6 | 7 | 8 | 9 | 10 |
| 2A | 30 A (6 kW) | 30 A (6 kW) | 30 A (6 kW) | 24 A (4.8 kW) | 0 A (6A) |
| 2B | 0 A (6 A) | 6 A (1.2 kW) | 14 A (2.8 kW) | 14 A (2.8 kW) | 22 A (4.4 kW) |
| 2C | 16 A (3.2 kW) | 16 A (3.2 kW) | 16 A (3.2 kW) | 16 A (3.2 kW) | 16 A (3.2 kW) |
| 2D | 0 A (6 A) | 0 A (6 A) | 0 A (6 A) | 6 A (1.2kW) | 22 A (4.4 kW) |
| Total | 46 A (9.2 kW) | 52 A (10.4 kW) | 60 A (12 kW) | 60 A (12 kW) | 60 A (12 kW) |

Table 5 is based on Table 2, which further shows a value of charge electric power (value obtained by multiplying the charging current value by 200 V) corresponding to a charging current value (second current value) while each charge facility 2 is charging. Note that, the rated power (rated supply electric power) of the three charge facilities 2A, 2B, and 2D of the four charge facilities 2 is 6 kW, and the rated power of the one charge facility 2C is 3.2 kW. Note that "Scene No." in Table 5 shows a supply situation of the charging current and supply electric power of the four charge facilities 2A, 2B, 2C, and 2D.

That is, Scene No. 6 corresponds to a situation where the two charge facilities 2A and 2C are supplying the charging currents, and the remaining two charge facilities 2B and 2D are not supplying the charging currents. Scene No. 7 corresponds to a situation where one charge facility 2B starts supplying the charging current from the situation of Scene No. 6. Scene No. 8 corresponds to a situation where a charging current value (second current value) to be assigned to the one charge facility 2B is increased from Scene No. 7. Scene No. 9 corresponds to a situation where the remaining one charge facility 2D starts supplying the charging current from Scene No. 8. Scene No. 10 corresponds to a situation where one charge facility 2A stops supplying the charging current from Scene No. 9.

First, a case where the charge facility 2B newly starts supplying the charging current (scene No. 7) will be described. In this case, a difference between the total (9.2 kW) of the supply electric power of the two charge facilities 2A and 2C currently supplying the charging currents and the maximum electric power (13 kW) is greater than the supply electric power (1.2 kW) when the charge facility 2B supplies the charging current of a first current value (6 A). Thus, the determiner 11 does not change the charging current values (the first current value and the second current values) assigned to the three charge facility 2A, 2B, and 2C including the two charge facilities 2A and 2C currently charging the charging currents.

Here, the total (10.4 kW) of the supply electric power of the three charge facilities 2A, 2B, and 2C is satisfactorily less than the maximum electric power (13 kW). Therefore, the determiner 11 increases the charging current value (second current value) to be assigned to the charge facility 2B from 6 A to, for example, 14 A (scene No. 8). Also when the charging current value to be assigned to the charge facility 2B is increased to 14A, the total value of the supply electric power of the three charge facilities 2A, 2B, and 2C is 12 kW and is thus suppressed to be less than the maximum electric power (13 kW).

Subsequently, a case where the remaining one charge facility 2D newly starts charging the charging current (scene No. 9) will be described. In this case, a difference between the total (12 kW) of the supply electric power of the three charge facilities 2A, 2B, and 2C currently supplying the charging currents and the maximum electric power (13 kW) is less than the supply electric power (1.2 kW) when the charge facility 2D supplies the charging current of the first current value (6A). Thus, the determiner 11 changes the second current value to be assigned to the charge facility 2A whose second current value is largest of the three charge facilities 2A, 2B, and 2C currently supplying the charging currents from 30 A to 24 A. Note that the determiner 11 does not change the charging current values (the first current value and the second current values) assigned to the remaining three charge facilities 2B, 2C, and 2D. Thus, the total of the supply electric power of the four charge facilities 2A, 2B, 2C, and 2D is kept at 12 kW.

Moreover, a case where one charge facility 2A stops supplying the charging current (Scene No. 10) from the situation where the four charge facilities 2A, 2B, 2C, and 2D are supplying the charging currents (Scene No. 9) will be described.

When the charge facility 2A stops supplying the charging current, the total of the supply electric power of the remaining three charge facilities 2B, 2C, and 2D is 7.2 kW. Thus, the determiner 11 changes each of the charging current values to be assigned to the two charge facilities 2B and 2D to 22 A. Note that for the remaining charge facility 2C, the rated current (16 A) has been assigned as the charging current value, and therefore, the determiner 11 does not change the charging current value (second current value). Thus, the total of the supply electric power of the three charge facilities 2B, 2C, and 2D is kept at 12 kW. Note that numerical values of the charging current value, the supply electric power, and the like described above are mere examples and are not limited to these examples.

Note that the charge facility 2 in the embodiment is not limited to a facility for supplying the charging current to the electric vehicle 3. That is, the charge facility 2 in the embodiment may be a charge facility compatible with a technique and a system, a so-called V2B (vehicle to building), for mutual electric power supply between a building and the electric vehicle 3.

### (5) Charge Control Method and Program

The charge control method according to the embodiment is executed by the determiner 11 of the charge control device 1 according to the embodiment.

The charge control method according to the embodiment includes a step of making an allocation of one or more first current values respectively to one or more charge facilities 2 which are included in the plurality of charge facilities 2 and each of which is not supplying the charging current. The charge control method according to the embodiment further includes a step of making an allocation of one or more second current values respectively to one or more charge facilities 2 which are included in the plurality of charge facilities 2 and each of which is supplying the charging current. The charge control method according to the embodiment determines the allocation of the one or more first current values and the allocation of the one or more second current values such that the total of the one or more first current values and the one or more second current values does not exceed an upper limit value which is predetermined.

Moreover, a program (computer program) according to the embodiment causes a computer to execute the step of making an allocation of one or more first current values respectively to one or more charge facilities 2 which are included in the plurality of charge facilities 2 and each of which is not supplying the charging current. The program according to the embodiment causes the computer to execute the step of making an allocation of one or more second current values respectively to one or more charge facilities 2 which are included in the plurality of charge facilities 2 and each of which is supplying the charging current. The program according to the embodiment causes the computer to execute the step of determining the allocation of the one or more first current values and the allocation of the one or more second current values such that the total of the one or more first current value and the one or more second current value does not exceed an upper limit value which is predetermined.

Thus, with the charge control method and the program according to the embodiment, a storage battery 30 of each of a plurality of electric vehicles 3 can be appropriately charged.

The program may be stored in advance in the memory of the computer. Alternatively, the program may also be downloaded through a telecommunications network or be distributed after having been recorded in some non-transitory storage medium such as a memory card, an optical disc, or a hard disk drive, any of which is readable for the computer. The processor of the computer system may be made up of a single or a plurality of electronic circuits including a semiconductor integrated circuit (IC) or a large-scale integrated circuit (LSI). As used herein, the "integrated circuit" such as an IC or an LSI is called by a different name depending on the degree of integration thereof. Examples of the integrated circuits include a system LSI, a very-large-scale integrated circuit (VLSI), and an ultra-large-scale integrated circuit (ULSI). Optionally, a field-programmable gate array (FPGA) to be programmed after an LSI has been fabricated or a reconfigurable logic device allowing the connections or circuit sections inside of an LSI to be reconfigured may also be adopted as the processor. Those electronic circuits may be either integrated together on a single chip or distributed on multiple chips, whichever is appropriate. Those multiple chips may be aggregated together in a single device or distributed in multiple devices without limitation. As used herein, the "computer" includes a microcontroller including one or more processors and one or more memories. Thus, the microcontroller may also be implemented as a single or a plurality of electronic circuits including a semiconductor integrated circuit or a large-scale integrated circuit.

### (6) Summary

A charge control device (1) of a first aspect of the present disclosure is configured to control a plurality of charge facilities (2). The plurality of charge facilities(2) are each electrically connectable to an electrically driven vehicle (electric vehicle 3) on which a storage battery (30) is mounted. The plurality of charge facilities(2) are each configured to supply a charging current to the storage battery (30) of the electrically driven vehicle, which is electrically connected, within a range not exceeding a charging current value allocated by the charge control device (1). The charge control device (1) of the first aspect includes a communicator (first communicator 10) configured to communicate with each of the plurality of charge facilities (2) and a determiner (11) configured to determine the charging current value to be allocated to each of the plurality of charge facilities(2). The charge control device (1) of the first aspect includes a controller (12) configured to cause the communicator to transmit the charging current value determined by the determiner (11) to each of the plurality of charge facilities (2). The determiner (11) is configured to make an allocation of one or more first current values respectively to one or more charge facilities (2) which are included in the plurality of charge facilities (2) and each of which is not supplying the charging current. The determiner (11) is configured to make an allocation of one or more second current values respectively to one or more charge facilities (2) which are included in the plurality of charge facilities (2) and each of which is supplying the charging current and determine the allocation of the one or more first current values and the allocation of the one or more second current values such that a total of the one or more first current values and the one or more second current values does not exceed an upper limit value which is predetermined.

The charge control device (1) of the first aspect is configured to make the allocation of the one or more first current values respectively to the one or more charge facilities (2) which are not supplying the charging current, and the determiner (11) is configured to determine the allocation of the one or more first current values and the allocation of the one or more second current values such that the total of the one or more first current values and the one or more second current values does not exceed the upper limit value. Therefore, in the charge control device (1) of the first aspect, also when the charge facility (2) newly starts supplying the charging current at the first current value, a total charging current of the charge facilities inclusively of the one or more charge facilities (2) which have been supplying the charging currents does not exceed the upper limit value. As a result, the charge control device (1) of the first aspect enables the storage battery (30) mounted on each of the electrically driven vehicles to be appropriately charged.

A charge control device (1) of a second aspect of the present disclosure would be implemented in combination with the first aspect. In the charge control device (1) of the second aspect, the determiner (11) preferably determines each of the one or more second current values to be a current value larger than or equal to each of the one or more first current values.

In the charge control device (1) of the second aspect, the determiner (11) determines each of the one or more second current values to be a current value larger than or equal to each of the one or more first current values, thereby reducing a time required to charge an electrically driven vehicle.

A charge control device (1) of a third aspect of the present disclosure would be implemented in combination with the second aspect. In the charge control device (1) of the third aspect, the determiner (11) preferably determines each of the one or more first current values to be a value smaller than or equal to a minimum value of the charging current required to charge the storage battery (30).

In the charge control device (1) of the third aspect, the first current value is smaller than or equal to the minimum value of the charging current required to charge the storage battery (30), and thus, the total charging current supplied from the plurality of charge facilities (2) is less likely to exceed the upper limit value when the charge facility (2) starts charging the charging current.

A charge control device (1) of a fourth aspect of the present disclosure would be implemented in combination with any one of the first to third aspects. In the charge control device (1) of the fourth aspect, each of the plurality of charge facilities(2) is preferably charged via an electric path protected by one or more circuit breakers (main breakers 40) . The determiner (11) preferably sets the upper limit value such that a current value when each of the one or more circuit breakers breaks the electric path due to overcurrent is not exceeded.

The charge control device (1) of the fourth aspect enables charging an electrically driven vehicle by the charge facility (2) to be prevented from being stopped due to the electric path broken by the circuit breaker.

A charge control device (1) of a fifth aspect of the present disclosure would be implemented in combination with any one of the first to fourth aspects. In the charge control device (1) of the fifth aspect, the determiner (11) preferably determines the allocation of the one or more first current values and the allocation of the one or more second current values such that a total value of a load current flowing to a load (9) other than the plurality of charge facilities (2), the one or more first current values, and the one or more second current values does not exceed the upper limit value.

The charge control device (1) of the fifth aspect enables the storage battery (30) of each of the electrically driven vehicles to be appropriately charged also when the load current is supplied to the load (9) other than the charge facilities (2).

A charge control device (1) of a sixth aspect of the present disclosure would be implemented in combination with the first to fifth aspects. In the charge control device (1) of the sixth aspect, the determiner (11) preferably reduces, when a difference between a total value of the one or more second current values and the upper limit value is less than or equal to a prescribed margin value, the second current value allocated to at least one of the one or more charge facilities (2).

The charge control device (1) of the sixth aspect avoids that the value of a total charging current exceeds the upper limit value.

A charge control device (1) of a seventh aspect of the present disclosure would be implemented in combination with any of the first to sixth aspects. In the charge control device (1) of the seventh aspect, the determiner (11) preferably changes, in response to a change in number of the one or more charge facilities (2) each of which is not supplying the charging current, change each of the one or more first current values in accordance with the number of the one or more charge facilities(2).

In the charge control device (1) of the seventh aspect, for example, when the number of charge facilities (2) which are included in the plurality of charge facilities (2) and each of which is not supplying the charging current decreases, each of the one or more first current values is reduced, thereby avoiding that the value of a total charging current exceeds the upper limit value when the number of charge facilities (2) which start supplying the charging currents further increases.

A charge control device (1) of an eighth aspect of the present disclosure would be implemented in combination with the first to seventh aspects. In the charge control device (1) according to the eighth aspect, the determiner (11) preferably changes, in response to a change in number of the one or more charge facilities (2) each of which is supplying the charging current, each of the one or more second current values in accordance with the number of the one or more charge facilities (2).

In the charge control device (1) of the eighth aspect, for example, when the number of charge facilities (2) which are included in the plurality of charge facilities (2) and each of which is supplying the charging currents increases, each of the one or more second current values is reduced, thereby avoiding that the value of a total charging current exceeds the upper limit value when the number of charge facilities (2) which start supplying the charging currents further increases.

A charge control device (1) of a ninth aspect of the present disclosure would be implemented in combination with any of the first to eighth aspects. The charge control device (1) of the ninth aspect preferably includes an acquirer (measuring device 7) configured to acquire a measured value of the charging current supplied from each of the plurality of charge facilities(2). The determiner (11) preferably increases the second current value allocated to one of the one or more charge facilities (2) when a total value of the measured value acquired by the acquirer is smaller than a total value of the one or more second current values.

The charge control device (1) of the ninth aspect enables the storage battery (30) mounted on each of the electrically driven vehicles to be more appropriately charged while a rapid increase in the charging current is prevented.

A charge control device (1) of a tenth aspect of the present disclosure would be implemented in combination with any one of the first to ninth aspects. In the charge control device (1) of the tenth aspect, the determiner (11) preferably increases each of the one or more second current values to be assigned respectively to one or more charge facility (2) which are included in the plurality of charge facilities (2) and which are charged with priority to be larger than each of the one or more second current values to be assigned respectively to one or more charge facilities (2) which are not charged with priority.

The charge control device (1) of the tenth aspect enables a charging time of electrically driven vehicle(s) charged by the one or more charge facilities (2) which are charged with priority.

A charge system (S1) of an eleventh aspect of the present disclosure includes the charge control device (1) of any one of the first to tenth aspects and the plurality of charge facilities (2) configured to be controlled by the charge control device (1). The plurality of charge facilities(2) are each configured to supply the charging current such that each of the one or more second current values indicated by the charge control device (1) is not exceeded.

The charge system (S1) of the eleventh aspect includes the charge control device (1) of any one of the first to tenth aspects and thus enables the storage battery (30) mounted on each of the electrically driven vehicles to be appropriately charged.

A charge control method of a twelfth aspect of the present disclosure is performed by the charge control device (1) of any one of the first to tenth aspects. The charge control method of the twelfth aspect includes a step of making an allocation of one or more first current values respectively to one or more charge facilities (2) which are included in the plurality of charge facilities (2) and each of which is not supplying the charging current. The charge control method of the twelfth aspect includes a step of making an allocation of one or more second current values respectively to one or more charge facilities (2) which are included in the plurality of charge facilities (2) and each of which is supplying the charging current. The charge control method of the twelfth aspect determines the allocation of the one or more first current values and the allocation of the one or more second current values such that a total of the one or more first current values and the one or more second current values does not exceed an upper limit value which is predetermined.

The charge control method of the twelfth aspect enables the storage batteries (30) of respective electrically driven vehicles to be appropriately charged.

A program of a thirteenth aspect of the present disclosure is configured to cause a computer to execute a step of making an allocation of one or more first current values respectively to one or more charge facilities (2) which are included in a plurality of charge facilities (2) and each of which is not supplying a charging current. The program of the thirteenth aspect is configured to cause the computer to execute a step of making an allocation of one or more second current values respectively to one or more charge facilities (2) which are included in the plurality of charge facilities (2) and each of which is supplying the charging current. The program of the thirteenth aspect is configured to cause the computer to execute a step of determining the allocation of the one or more second current values such that a total of the one or more first current values and the one or more second current values does not exceed an upper limit value which is predetermined.

The program of the thirteenth aspect enables the storage batteries (30) of respective electrically driven vehicles to be appropriately charged.

### Reference Signs List

- S1: Charge System
- 1: Charge Control Device
- 2: Charge Facility
- 3: Electric vehicle (Electrically driven vehicle)
- 7: Measuring Device (Acquirer)
- 9: Load
- 10: First Communicator (Communicator)
- 11: Determiner
- 12: Controller
- 30: Storage Battery
- 40: Main Breaker (Circuit Breaker)

## Claims

1. A charge control device configured to control a plurality of charge facilities, the plurality of charge facilities each being electrically connectable to an electrically driven vehicle on which a storage battery is mounted, the plurality of charge facilities each being configured to supply a charging current to the storage battery of the electrically driven vehicle, which is electrically connected, within a range not exceeding a charging current value allocated by the charge control device, the charge control device comprising:
a communicator configured to communicate with each of the plurality of charge facilities;
a determiner configured to determine the charging current value to be allocated to each of the plurality of charge facilities; and
a controller configured to cause the communicator to transmit the charging current value determined by the determiner to each of the plurality of charge facilities,
the determiner being configured to
make an allocation of one or more first current values respectively to one or more charge facilities which are included in the plurality of charge facilities and each of which is not supplying the charging current,
make an allocation of one or more second current values respectively to one or more charge facilities which are included in the plurality of charge facilities and each of which is supplying the charging current, and
determine the allocation of the one or more first current values and the allocation of the one or more second current values such that a total of the one or more first current values and the one or more second current values does not exceed an upper limit value which is predetermined.

2. The charge control device of claim 1, wherein
the determiner is configured to determine each of the one or more second current values to be a current value larger than or equal to each of the one or more first current values.

3. The charge control device of claim 2, wherein
the determiner is configured to determine each of the one or more first current values to be a value smaller than or equal to a minimum value of the charging current required to charge the storage battery.

4. The charge control device of any one of claims 1 to 3, wherein
the plurality of charge facilities are each configured to be charged via an electric path protected by one or more circuit breakers, and
the determiner is configured to set the upper limit value such that a current value when each of the one or more circuit breakers breaks the electric path due to overcurrent is not exceeded.

5. The charge control device of any one of claims 1 to 4, wherein
the determiner is configured to determine the allocation of the one or more first current values and the allocation of the one or more second current values such that a total value of a load current flowing to a load other than the plurality of charge facilities, the one or more first current values, and the one or more second current values does not exceed the upper limit value.

6. The charge control device of any one of claims 1 to 5, wherein
the determiner is configured to, when a difference between a total value of the one or more second current values and the upper limit value is less than or equal to a prescribed margin value, reduce the second current value allocated to at least one of the one or more charge facilities.

7. The charge control device of any one of claims 1 to 6, wherein
the determiner is configured to, in response to a change in number of the one or more charge facilities each of which is not supplying the charging current, change each of the one or more first current values in accordance with the number of the one or more charge facilities.

8. The charge control device of any one of claims 1 to 7, wherein
the determiner is configured to, in response to a change in number of the one or more charge facilities each of which is supplying the charging current, change each of the one or more second current values in accordance with the number of the one or more charge facilities.

9. The charge control device of any one of claims 1 to 8, further comprising an acquirer configured to acquire a measured value of the charging current supplied from each of the plurality of charge facilities, wherein
the determiner is configured to increase the second current value allocated to one of the one or more charge facilities when a total value of the measured value acquired by the acquirer is smaller than a total value of the one or more second current values.

10. The charge control device of any one of claims 1 to 9, wherein
the determiner is configured to increase each of the one or more second current values to be assigned respectively to one or more charge facility which are included in the plurality of charge facilities and which are charged with priority to be larger than each of the one or more second current values to be assigned respectively to one or more charge facilities which are not charged with priority.

11. A charge system comprising:
the charge control device of any one of claims 1 to 10; and
the plurality of charge facilities configured to be controlled by the charge control device,
the plurality of charge facilities each being configured to supply the charging current such that each of the one or more second current values indicated by the charge control device is not exceeded.

12. A charge control method performed by the charge control device of any one of claims 1 to 10, the charge control method comprising:
a step of making an allocation of one or more first current values respectively to one or more charge facilities which are included in the plurality of charge facilities and each of which is not supplying the charging current; and
a step of making an allocation of one or more second current values respectively to one or more charge facilities which are included in the plurality of charge facilities and each of which is supplying the charging current,
the charge control method determining the allocation of the one or more first current values and the allocation of the one or more second current values such that a total of the one or more first current values and the one or more second current values does not exceed an upper limit value which is predetermined.

13. A program configured to cause a computer to execute
a step of making an allocation of one or more first current values respectively to one or more charge facilities which are included in a plurality of charge facilities and each of which is not supplying a charging current;
a step of making an allocation of one or more second current values respectively to one or more charge facilities which are included in the plurality of charge facilities and each of which is supplying the charging current; and
a step of determining the allocation of the one or more first current values and the allocation of the one or more second current values such that a total of the one or more first current values and the one or more second current values does not exceed an upper limit value which is predetermined.
